# EUROPEAN PATENT SPECIFICATION

(11) **EP 3 175 304 B1**
(45) Date of publication and mention of the grant of the patent: **11.05.2022**
(21) Application number: 15744814.3
(22) Date of filing: 15.07.2015
(51) Int. Cl.: G05B 19/05, G05B 19/418, H04L 29/06, H04W 88/18

(54) **APPARATUS AND METHOD FOR SECURITY OF INDUSTRIAL CONTROL NETWORKS**
VORRICHTUNG UND VERFAHREN ZUR SICHERHEIT VON INDUSTRIESTEUERUNGSNETZEN
APPAREIL ET PROCÉDÉ POUR LA SÉCURITÉ DE RÉSEAUX DE COMMANDE INDUSTRIELS

(30) Priority: 28.07.2014 US 201462029695 P; 19.03.2015 US 201514663003
(43) Date of publication of application: 07.06.2017
(73) Proprietor: Intelligent Platforms, LLC, Charlottesville, VA 22911 (US)
(72) Inventor: CRAWFORD, Kenneth, Wayne, Charlottesville, VA 22911 (US)
(74) Representative: Ligi, Stefano
(86) International application number: PCT/US2015/040506
(87) International publication number: WO 2016/018622

(56) References cited:
- EP-A1- 1 640 836
- EP-A2- 1 283 632
- WO-A1-2007/075099
- US-A1- 2007 112 961
- JEFF TYSON: "How Firewalls Work", INTERNET CITATION, 2 April 2003 (2003-04-02), XP002419032, Retrieved from the Internet: URL:http://web.archive.org/web/20030402210 309/http://computer.howstuffworks.com/fire wall.htm [retrieved on 2007-02-08]

## Description

### BACKGROUND OF THE INVENTION FIELD OF THE INVENTION

The subject matter disclosed herein generally relates to network security and, more specifically, to providing security for industrial control systems.

### BRIEF DESCRIPTION OF THE RELATED ART

Various systems deploy sensors that are used to obtain different types of information. These systems also sometimes include actuators that operate particular devices within these systems. The sensors are often deployed in industrial control systems.

Computer viruses and other security threats exist in today's networking environment. These threats also threaten industrial control systems. If no action were to be taken to combat these security threats, the industrial control systems (and their associated devices) could potentially be harmed or improperly operated by unauthorized users to mention two adverse consequences.

Various security approaches have been utilized to secure industrial control systems. For instance, software patches have been used in an attempt to alleviate security problems. EP 1640836 A1 describes an industrial automation system with a central access authority that provides access rules and a proxy that receives the access rules and an access request. The proxy determines whether the access request is permitted based at least upon characteristics of the access request and the access rules. However, these patches have problems. For example, the use of a patch might require shutting the entire control network down in order to install the patch. Additionally, the patches are typically ineffective in combating most security threats, because the patches are not compatible with the existing control system software code or are simply incapable of stopping the security threat. Traditionally there is a large time between the time that the security tag has been identified and the patch being installed. All the while, the control system is vulnerable to this new threat.

Document WO 2007/075099 A1 describes a known automation network, access service proxy for automation network and a method for transmitting operating data between a programmable controller and a remote computer.

All of these problems have resulted in general user dissatisfaction with previous approaches. Due to the high frequency of new patch releases and the impact to daily operations result in perceived low system quality.

### BRIEF DESCRIPTION OF THE INVENTION

The approaches described herein provide a method for providing security for a programmable logic controller according to the annexed independent claim 1.

A system for providing security for a programmable logic control (PLC) is provided according to the annexed independent claim 3.

### BRIEF DESCRIPTION OF THE DRAWINGS

For a more complete understanding of the disclosure, reference should be made to the following detailed description and accompanying drawings wherein:
FIG. 1 comprises a block diagram of a system including a control network that includes a network security module according to various embodiments of the present invention;
FIG. 2 comprises a flow chart showing the operation of a network security module according to various embodiments of the present invention;
FIG. 3 comprises a flow chart showing aspects of the operation of a network control module according to various embodiments of the present invention;
FIG. 4 comprises a flow chart showing other aspects of the operation of a network control module according to various embodiments of the present invention;
FIG. 5 comprises a flow chart showing yet other aspects of the operation of a network control module according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### DETAILED DESCRIPTION OF THE INVENTION

The approaches described herein provide a network security module, which acts as a target imposter to execute and/or implement network patches (or other security hardware and/or software) by acting as a PLC proxy. In other words, the network security module implements the functionality of security patches (or other security hardware and/or software). These approaches eliminate the need to update PLC software to implement PLC network security patches by enabling an external device to provide network protection against known security threats that would otherwise need to be provided by the PLC by software patch updates installed thereon. The security module stays current by obtaining automatic updates from the cloud resulting in minimal PLC downtime and minimal latency from initial threat detection to protection. The security module can implement security patches that would otherwise be impossible to implement in the current PLC architecture. The security module also provides threat notifications to inform the client/user of network threats, network configuration changes, attacks and unusual network activity.

Once installed and in one aspect, the network security module clones (or copies) the media access control (MAC) and internet protocol (IP) addresses of the PLC to become a PLC proxy. In some other aspects, the network security module monitors all network traffic and filters traffic that is identified as a network security threat thereby preventing that traffic reaching the PLC and thus preventing a cyber-attack on the asset. In another aspect, an independent third generation (3G) or wireless connection to the cloud provides a path for continual sentinel software updates to keep the functionality of the security module up to date as well as providing threat messaging back to the user.

The present approaches provide various advantages and benefits. For example, the present approaches provide industrial systems with up-to-date methods of cyber security protection. The present approaches additionally do not require trained source personnel to implement, install and validate operation of patches. Consequently, system operating costs are reduced. The present approaches also add cyber security/network security without redesigning/modernizing network infrastructure.

Other advantages provided include the automatic update of security software and no downtime for the PLC to update software. There is also no need to invest heavily in new network infrastructure. The software used to implement these approaches can be very quickly installed.

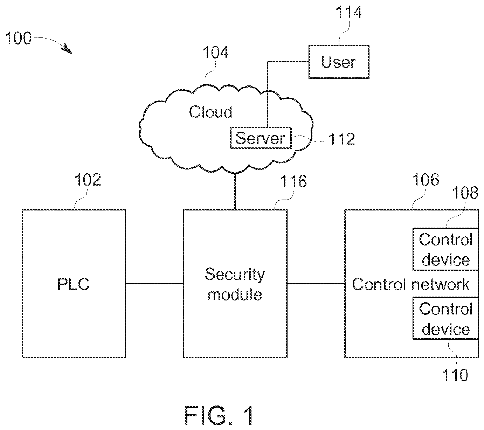

Referring now to FIG. 1, one example of a system 100 for providing security to industrial networks is described. The system 100 includes a programmed logic controller (PLC) 102, a cloud network 104, and a control network 106. The control network 106 includes control devices 108 and 110. The cloud network 104 includes a server 112 and the server 112 is coupled to a user 114. The PLC 102, cloud network 104, and control network 106 are coupled to a network security module 116.

The PLC 102 is any processing device that executes programmed computer instructions. The cloud network 104 is any type of network or combination of networks. The server 112 provides, for example, routing functions for data moving to and from the control network 106.

The control network 106 includes control devices 108 and 110. The control devices 108 and 110 may be configured to provide any type of control functionality. For example, the control devices 108 and 110 may operate switches, actuate valves, or activate/deactivate devices. The control devices 108 and 110 may be coupled together in a control network 106 with any network topology or using any type of network or combination of networks. The control network 106 may be disposed in any type of environment, setting, or location such as a factory, industrial plant, school, business, home, to mention a few examples. Other examples are possible.

The security module 116 clones (or copies) the media access control (MAC) and internet protocol (IP) addresses of the PLC to become a PLC proxy. In some other aspects, the security module 116 monitors all network traffic it receives from the cloud network 104 and filters traffic that is identified as a network security threat thereby preventing that traffic by reaching the PLC 102 thereby preventing a cyber-attack on the asset. Along with this, the threat can also come from control network 106 (for example, someone can use an infected USB thumbdrive on a maintenance laptop that is connected to the controls network).

The network security module 116 acts as a proxy or impersonator. In these regards, the network security module 116 is transparent to the user 114 on the cloud network 1 04. In other words, users on the cloud network 104 believe they have direct access to the control network 106, when in fact all the traffic goes through the network security module 116. Additionally, if the threat originates within control network 106 then the threat will be mitigated by 116 and 116 will forward a time stamped message to the server 104 via network.

In this way, the PLC 102 and the control network 106 are protected from security threats external to the control network 106 and internal threats as well. For example, cyber attacks originating from the cloud network 104 will not reach the control network 106. Additionally, cyber-attacks originating from control network 106 will not reach cloud network 104. In some aspects, a PLC program (originally downloaded) can be obtained from its PLC and
uploaded to the cloud to validate equality (i.e., the program in the PLC was the same program that was downloaded) ensuring that the original program has not been altered.

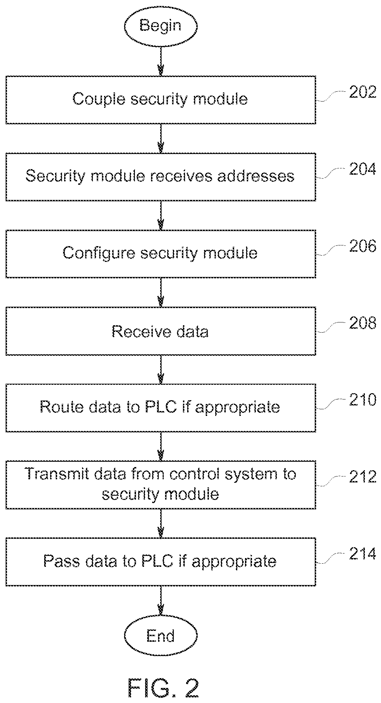

Referring now to FIG. 2, one example of how a security module (e.g., the security module 116 of FIG. 1) operates is described.

At step 202, a network security module is coupled to the PLC, the cloud network, and the control network. The coupling can be manually accomplished by a technician.

At step 204, the security module receives network addresses associated with the identity of the PLC. It receives the MAC and IP addresses of the PLC. At step 206, the security module is configured with the address information (e.g., the MAC and IP addresses it has received). Also at step 206, the cloning of MAC and IP addresses is configured.

Consequently, at step 208 data sent from the cloud and addressed to the PLC goes first to the security module and is then routed to the PLC at step 210 if appropriate. From the PLC, the data may be sent to the control network. The data might also be transmitted to the cloud. For example, data that is deemed not to be a security threat may be passed to the PLC and control network. The data coming from the control network is being screened by the network security device, and if a threat is detected then a time stamped threat message is sent to the cloud.

At step 212, data from the control system is transmitted to the security module. At step 214, the data is passed to the PLC if appropriate. The data can then be passed to the cloud.

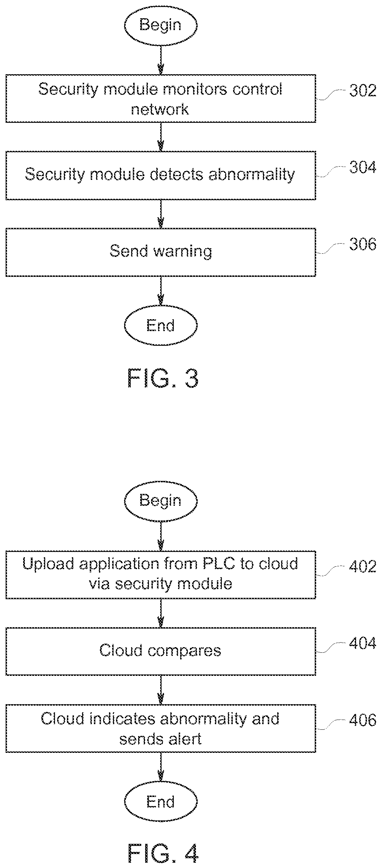

Referring now to FIG. 3, one example of how the security module provides security is described. At step 302, the security module monitors data traffic at the control network. For example, the security module may monitor data traffic on the control network for certain addresses, users, or other types of information (including data content) in the data.

At step 304, the security module detects an abnormality during its monitoring of traffic on the control network. In one example, the abnormality is a new address detected in the data that is being transmitted. In another example, the abnormality is a change in bandwidth of the traffic on the control network. Other examples of abnormalities are possible.

At step 306, once an abnormality is determined or detected, the security module sends a warning or alert message to an appropriate entity. For example, the message may be sent to a centrai control center coupled to the cloud. In another example, the appropriate authorities may be altered. The message may be in any format such as an email or voice message to mention two examples.

Referring now to FIG. 4, another example showing how the security module operates as described. At step 402, an application is uploaded from the PLC to the cloud via the security module. By "application", it is meant any software application including the code, data, or other information comprising the application.

At step 404, the cloud makes a comparison between the application and reference information. In these regards, the cloud may have reference data that shows how an application is to be normally configured.

At step 406, if the comparison indicates an abnormality, then an alert message is sent to the user. For example, the message may be sent to a central control center coupled to the cloud. In another example, the appropriate authorities may be altered. The message may be in any format such as an email or voice message to mention two examples.

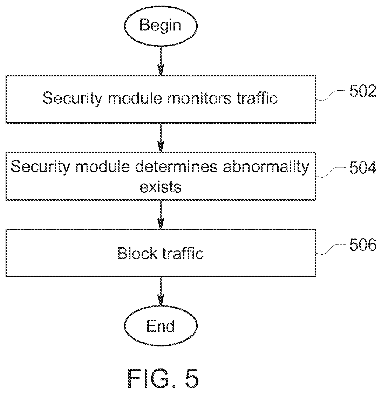

Referring now to FIG. 5, another example showing other aspects of security module operation is described. At step 502, the security module monitors incoming traffic from the cloud (or the control network). For example, the security module may monitor for certain addresses.

At step 504, it determines if any abnormality exists. For example, the security module may determine that the traffic is from the wrong user (e.g., an unauthorized user or a user associated with an unauthorized web site to mention two examples). In these regards, the network security module may have stored a list of inappropriate users or web sites to determine the nature of the user.

At step 506, if there is an abnormality, the security module blocks the incoming traffic. Consequently, data traffic that could potentially harm the control network (and devices disposed within the control network) is prevented from reaching the control network and is stopped at the network security module.

In addition and as mentioned, a threat may also originate from a control network to PLC. For example, the data coming from the control network may be screened by the network security module as described, and if a threat is detected then a time stamped threat message (or other type of alert) may be sent to the cloud.

## Claims

1. A method for providing security for a programmable logic controller (PLC) (102), comprising:
coupling (202) a security module (116) between the PLC (102) and a remote network (104), and between the PLC (102) and a control network (106);
cloning the security module (116) as a PLC proxy for a PLC module, the cloning comprising copying at least one of a media access control (MAC) address and an internet protocol (IP) address of the PLC (102) to the security module (116);
receiving (208) at the security module (116) data that are addressed to the PLC (102) and are coming from the remote network (104) and/or from the control network (106), the data comprising at least one of the media access control (MAC) address and the internet protocol (IP) address of the PLC (102);
whereas the security module (116) is configured to be transparent to users of the control network (106) and to users (114) of the remote network (104) and appears to users that have direct access to the control network (106) from the remote network,
the method being **characterized by** further comprising:
monitoring by the security module (116) data traffic on the control network for certain addresses, users, or data content in the data and if the security module (116) detects an abnormality during its monitoring of traffic on the control network, sending by the security module (116) a warning or alert message to the remote network (104), and
monitoring by the security module (116) incoming data traffic from the remote network (104) and if the security module (116) detects an abnormality, blocking by the security module (116) the incoming traffic.

2. The method of claim 1, further comprising the step of monitoring and filtering the network traffic before transmitting the message to the PLC (102).

3. A system for providing security for a programmable logic control (PLC) (102), comprising:
a security module (116) operatively coupled between a remote network (104) and the PLC (102), and between a control network (106) and the PLC (102), the security module (116) is configured to receive (208) data that are addressed to the PLC (102) and are coming from the remote network (104) and/or from the control network (106), the data comprising at least one of a media access control (MAC) address and an internet protocol (IP) address of the PLC (102);
the system is configured to cloning the security module (116) as a PLC proxy for a PLC module, the cloning comprising copying at least one of a media access control (MAC) address and an internet protocol (IP) address of the PLC (102) to the security module (116);
whereas the security module (116) is configured to be transparent to users of the control network (106) and to users (114) of the remote network (104) and appears to users that have direct access to the control network (106) from the remote network,
the system being **characterized in that** is configured to:
monitoring by the security module (116) data traffic on the control network for certain addresses, users, or data content in the data and if the security module (116) detects an abnormality during its monitoring of traffic on the control network, sending by the security module (116) a warning or alert message to the remote network (104), and
monitoring by the security module (116) incoming data traffic from the remote network (104) and if the security module (116) detects an abnormality, blocking by the security module (116) the incoming traffic.

4. The system of claim 3, wherein the security module (116) is configured to monitor and filter the network traffic prior to transmitting the network traffic to the PLC (102).

## Patentansprüche

1. Verfahren zum Bereitstellen der Sicherheit einer programmierbaren Logiksteuerung (PLC) (102), umfassend:
Koppeln (202) eines Sicherheitsmoduls (116) zwischen der PLC (102) und einem Fernnetzwerk (104) und zwischen der PLC (102) und einem Steuernetzwerk (106);
Klonen des Sicherheitsmoduls (116) als ein PLC-Proxy für ein PLC-Modul, wobei das Klonen ein Kopieren wenigstens einer Medienzugriffssteueradresse (MAC) und einer Internetprotokolladresse (IP) der PLC auf das Sicherheitsmodul (116) umfasst;
Empfangen von Daten von dem Sicherheitsmodul (116), die an die PLC adressiert sind und von dem Fernnetzwerk (104) und/oder von dem Steuernetzwerk (106) kommen, wobei die Daten wenigstens eine Medienzugriffssteueradresse (MAC) und eine Internetprotokolladresse (IP) der PLC umfassen;
wobei das Sicherheitsmodul (116) so konfiguriert ist, dass es für Benutzer des Steuernetzwerks (106) und für Benutzer (114) des Fernnetzwerks (104 unsichtbar ist und für Benutzer, die direkten Zugriff auf das Steuernetzwerk (106) von dem Fernnetzwerk aus haben, sichtbar ist,
wobei das Verfahren **dadurch gekennzeichnet ist, dass** es Folgendes umfasst:
Überwachen des Datenverkehrs auf dem Steuernetzwerk durch das Sicherheitsmodul (116) auf bestimmte Adressen, Benutzer oder Dateninhalte in den Daten und Senden durch das Sicherheitsmodul (116) einer Warn- oder Alarmmeldung an das Fernnetzwerk (104), wenn das Sicherheitsmodul (116) eine Abnormalität während seiner Überwachung des Verkehrs auf dem Steuernetzwerk detektiert, und Überwachen des eingehenden Datenverkehrs von dem Fernnetzwerk (104) durch das Sicherheitsmodul (116) und Blockieren des eingehenden Datenverkehrs durch das Sicherheitsmodul (116), wenn das Sicherheitsmodul (116) eine Abnormalität detektiert.

2. Verfahren nach Anspruch 1, das ferner den Schritt des Überwachens und des Filterns des Netzwerkverkehrs vor dem Übermitteln der Meldung an die PLC (102) umfasst.

3. System zum Bereitstellen der Sicherheit einer programmierbaren Logiksteuerung (PLC) (102), umfassend:
ein Sicherheitsmodul (116), das zwischen einem Fernnetzwerk (104) und der PLC (102) und zwischen einem Steuernetzwerk (106) und der PLC operativ gekoppelt ist, wobei das Sicherheitsmodul (116) dazu konfiguriert ist, Daten, die an die PLC (102) adressiert sind und von dem Fernnetzwerk (104) und/oder von dem Steuernetzwerk (106) kommen, zu empfangen (208), wobei die Daten wenigstens eine Medienzugriffssteueradresse (MAC) und eine Internetprotokolladresse (IP) von der PLC (102) aufweisen;
wobei das System dazu konfiguriert ist, das Sicherheitsmodul (116) als ein PLC-Proxy für ein PLC-Modul zu klonen, wobei das Klonen ein Kopieren wenigstens einer Medienzugriffssteueradresse (MAC) und einer Internetprotokolladresse (IP) der PLC (102) auf das Sicherheitsmodul (116) umfasst;
wobei das Sicherheitsmodul (116) so konfiguriert ist, dass es für Benutzer von dem Steuernetzwerk (106) und für Benutzer (114) von dem Fernnetzwerk (104) unsichtbar ist und für Benutzer, die direkten Zugriff auf das Steuernetzwerk (106) von dem Fernnetzwerk aus haben, sichtbar ist,
wobei das System **dadurch gekennzeichnet ist, dass** es dazu konfiguriert ist:
den Datenverkehr auf dem Steuernetzwerk durch das Sicherheitsmodul (116) auf bestimmte Adressen, Benutzer oder Dateninhalte in den Daten zu überwachen und durch das Sicherheitsmodul (116) eine Warn- oder Alarmmeldung an das Fernnetzwerk (104) zu senden, wenn das Sicherheitsmodul (116) eine Abnormalität während seiner Überwachung des Verkehrs auf dem Steuernetzwerk detektiert, und
den eingehenden Datenverkehr von dem Fernnetzwerk (104) durch das Sicherheitsmodul (116) zu überwachen und den eingehenden Datenverkehr zu blockieren, wenn das Sicherheitsmodul (116) eine Abnormalität detektiert.

4. System nach Anspruch 3, wobei das Sicherheitsmodul (116) dazu konfiguriert ist, den Netzwerkverkehr vor dem Übermitteln des Netzwerkverkehrs an die PLC (102) zu überwachen und zu filtern.

## Revendications

1. Un procédé pour procurer de la sécurité à un contrôleur logique programmable (PLC) (102), comprenant :
le fait (202) de relier un module de sécurité (116) entre le PLC (102) et un réseau distant (104), et entre le PLC (102) et un réseau de commande (106) ;
le fait de cloner le module de sécurité (116) en tant que proxy PLC pour un module PLC, le clonage comprenant le fait de copier au moins l'une parmi une adresse de commande d'accès au support (MAC) et une adresse de protocole Internet (IP) du PLC (102) vers le module de sécurité (116) ;
le fait (208) de recevoir au niveau du module de sécurité (116) des données qui sont adressées au PLC (102) et qui proviennent du réseau distant (104) et/ou du réseau de commande (106), les données comprenant au moins une parmi l'adresse de commande d'accès au support (MAC) et l'adresse de protocole Internet (IP) du PLC (102) ;
tandis que le module de sécurité (116) est configuré pour être transparent aux utilisateurs du réseau de commande (106) et aux utilisateurs (114) du réseau distant (104) et apparaît aux utilisateurs qui ont un accès direct au réseau de commande (106) depuis le réseau distant,
le procédé étant **caractérisé par le fait qu'**il comprend en outre :
le fait, par le module de sécurité (116), de surveiller le trafic de données sur le réseau de commande pour certaines adresses, certains utilisateurs, ou un certain contenu de données dans les données, et, si le module de sécurité (116) détecte une anomalie lors de sa surveillance du trafic sur le réseau de commande, le fait, par le module de sécurité (116), d'envoyer un message d'avertissement ou d'alerte au réseau distant (104), et
le fait, par le module de sécurité (116), de surveiller le trafic de données entrant provenant du réseau distant (104) et, si le module de sécurité (116) détecte une anomalie, le fait, par le module de sécurité (116), de bloquer le trafic entrant.

2. Le procédé selon la revendication 1, comprenant en outre l'étape consistant à surveiller et à filtrer le trafic réseau avant de transmettre le message au PLC (102).

3. Un système pour procurer de la sécurité à un contrôleur logique programmable (PLC) (102), comprenant :
un module de sécurité (116) relié fonctionnellement entre un réseau distant (104) et le PLC (102), et entre un réseau de commande (106) et le PLC (102), le module de sécurité (116) est configuré pour recevoir (208) des données qui sont adressées au PLC (102) et qui proviennent du réseau distant (104) et/ou du réseau de commande (106), les données comprenant au moins une parmi une adresse de commande d'accès au support (MAC) et une adresse de protocole Internet (IP) du PLC (102) ;
le système est configuré pour cloner le module de sécurité (116) en tant que proxy PLC pour un module PLC, le clonage comprenant le fait de copier au moins une parmi une adresse de commande d'accès au support (MAC) et une adresse de protocole Internet (IP) du PLC (102) vers le module de sécurité (116) ;
tandis que le module de sécurité (116) est configuré pour être transparent aux utilisateurs du réseau de commande (106) et aux utilisateurs (114) du réseau distant (104) et apparaît aux utilisateurs qui ont un accès direct au réseau de commande (106) depuis le réseau distant,
le système étant **caractérisé en ce qu'**il est configuré pour :
surveiller par le module de sécurité (116) le trafic de données sur le réseau de commande pour certaines adresses, certains utilisateurs, ou un certain contenu de données dans les données, et, si le module de sécurité (116) détecte une anomalie lors de sa surveillance du trafic sur le réseau de commande, envoyer par le module de sécurité (116) un message d'avertissement ou d'alerte au réseau distant (104), et
surveiller par le module de sécurité (116) le trafic de données entrant provenant du réseau distant (104) et, si le module de sécurité (116) détecte une anomalie, bloquer par le module de sécurité (116) le trafic entrant.

4. Le système selon la revendication 3, dans lequel le module de sécurité (116) est configuré pour surveiller et filtrer le trafic réseau avant de transmettre le trafic réseau au PLC (102).
